# EUROPÄISCHE PATENTSCHRIFT

(11) **EP 0 356 786 B1**
(45) Veröffentlichungstag und Bekanntmachung des Hinweises auf die Patenterteilung: **23.02.1994**
(21) Anmeldenummer: 89114852.0
(22) Anmeldetag: 10.08.1989
(51) Int. Cl.: G02B 6/44

(54) **Optisches Kabel mit einem Trägerkörper**
Optical cable with a support member
Câble optique avec un support central

(30) Priorität: 30.08.1988 DE 3829410
(43) Veröffentlichungstag der Anmeldung: 07.03.1990
(73) Patentinhaber: SIEMENS AKTIENGESELLSCHAFT, 80333 München (DE)
(72) Erfinder: Dotzer, Peter, D-8000 München 70 (DE); Glaser, Heinz, D-8034 Germering (DE); Mayr, Ernst, D-8130 Starnberg (DE); Oestreich, Ulrich, Dipl.-Ing., D-8000 München 70 (DE)

(56) Entgegenhaltungen:
- FR-A- 2 288 318
- REVIEW OF THE ELECTRICAL COMMUNICATIONS LABORATORIES, Band 35, Nr. 6, November 1987, Seiten 627-632; N. UESUGI et al.: "Dispersion-shifted optical fiber cable for high-capacity trunk transmission line"
- PATENT ABSTRACTS OF JAPAN, Band 12, Nr. 210 (P-717)[3057], 16. Juni 1988; & JP-A-63 8712

## Beschreibung

Die Erfindung betrifft ein optisches Kabel mit in einem Trägerkörper sich in Längsrichtung wendelförmig erstreckenden, von außen zugänglichen Kammern, die zur Aufnahme von Lichtwellenleitern dienen, wobei diese Kammern durch Stege gegeneinander abgetrennt sind und in den Stegen zusätzlich nach außen offene Vertiefungen angebracht sind.

Ein Kabel dieser Art ist aus der Japanese Patent Abstracts, Vol.12, Nr. 210 (P-717) (3057) (zugehörig zu JP-A-63-8712) bekannt. Dort sind über den Umfang verteilt mehrere U-förmig gestaltete größere Vertiefungen vorgesehen, die zur Aufnahme von Lichtwellenleiterbündeln dienen. Zwischen diesen größeren Vertiefungen sind jeweils relativ kleine, ebenfalls U-förmig gestaltete Vertiefungen angeordnet. Es ergeben sich dabei hinsichtlich der Wandstärkeverteilung in den Trennstegen zwischen den großen Vertiefungen zwei unterschiedliche Bereiche, nämlich ein äußerer Bereich (entsprechend der Tiefe der kleinen Vertiefungen) mit relativ geringen Wandstärken und ein weiter innen liegender Bereich mit einem Vielfachen dieser Wandstärke. Derartige ungleichmäßige Materialquerschnitte im Stegbereich sind, wie später noch erläutert wird, äußerst ungünstig und können zu Schwierigkeit führen.

Aus "Review of the Electrical Communications Laboratories" 35 (1987), Nov., No.6, Tokyo, Japan, S. 627-632; ist ein Kammerkabel bekannt, das etwa rechteckförmige Vertiefungen aufweist, in denen teils Lichtwellenleiter-Bändchenstapel, teils elektrische Leiter angeordnet sind. Auch bei dieser Struktur haben die Stege zwischen den einzelnen Kammern unterschiedliche Materialstärken, die von innen nach außen gesehen jeweils zunehmend größer werden.

Aus der DE-PS 24 49 439 ist ein Kabel bekannt, bei dem die die Kammern voneinander trennenden Stege (in radialer Richtung gesehen) gleichbleibende Wandstärken aufweisen. Dies ergibt allerdings ein Kammerprofil, welches sich nach außen sektorförmig erweitert.

Bei einer Reihe von Anwendungsfällen ist es erforderlich, andere Kammerprofile als genau sektorförmige vorzusehen. Beispielsweise können etwa rechteckförmige Kammerprofile dann zweckmäßig sein, wenn in diese Kammern Bändchenstapel eingelegt werden, d.h. Stapel von Lichtwellenleiteranordnungen, bei denen jeweils mehrere Lichtwellenleiter nebeneinander in der Art eines Bandkabels angeordnet sind. Ein derartiger Bändchenstapel hat außen eine etwa rechteckige Kontur und dementsprechend sollte auch der Querschnitt der zugehörigen Kammer etwa rechteckförmig gestaltet sein. Andernfalls könnten die bändchenförmigen Elemente sich zu leicht gegeneinander verschieben, verkanten oder verdrehen und so örtlich und im Mittel über die ganze Kabellänge Zusatzdämpfungen erleiden. Für bändchenförmige Elemente ist es also zweckmäßig, den seitlichen Spielraum definiert einzuschränken.

Bei nicht genau sektorförmigen Kammerquerschnitten ergibt sich das Problem, daß die Stege ungleichmäßige Materialquerschnitte aufweisen, wobei weiter innen geringere Wandstärken und weiter außen größere Wandstärken auftreten. Wenn der die Kammern enthaltende Trägerkörper durch Extrudieren hergestellt wird, kann es beim Abkühlen infolge der ungleichmäßigen Materialverteilungen zu unerwünschten Deformationen des Kammerprofils kommen.

Der Erfindung liegt die Aufgabe zugrunde, derartige unerwünschte Materialanhäufungen im Bereich des Trägerkörpers möglichst weitgehend zu vermeiden und dabei gleichzeitig die wärmeabgebende Oberfläche so zu vergrößern, daß die Erstarrung der Stege sehr viel schneller und gleichmäßiger verläuft. Gemäß der Erfindung, welche sich auf ein optisches Kabel der eingangs genannten Art bezieht, wird dies dadurch erreicht, daß die Kammern einen etwa rechteckigen Querschnitt und die Vertiefungen einen etwa dreieckförmigen Querschnitt aufweisen sowie eine Querschnittsfläche, die von der Querschnittsfläche der kammern verschieden ist und daß die verbleibenden Stege eine im wesentlichen gleichbleibende Wandstärke aufweisen.

Die zusätzlich angebrachten, nach außen offenen Vertiefungen haben also bei der Erfindung nicht nur die Funktion, zusätzlichen Platz zu schaffen, sondern durch ihre Anbringung wird die sonst im Stegbereich auftretende unerwünschten Materialanhäufung beseitigt und es werden die Kühlflächen möglichst weitgehend vergrößert und gleichmäßiger gestaltet. Ein weiterer Vorteil der Erfindung ist im übrigen auch darin zu sehen, daß der Materialaufwand für die Herstellung des Trägerkörpers verringert werden kann.

Eine Möglichkeit für eine zusätzliche Ausnützung der zusätzlichen Vertiefungen besteht darin, daß diese der Aufnahme weiterer einzelner Lichtwellenleiter dienen. Eine weitere Möglichkeit für die Ausnützung der zusätzlichen Vertiefungen ist dadurch gegeben, daß diese für die Aufnahme von elektrischen Leitern herangezogen werden, beispielsweise solchen, welche für die Fernspeisung von Zwischenverstärkern benötigt werden. Es ist auch möglich, in den zusätzlichen Vertiefungen Zugelemente vorzusehen, die entweder als Zugkraftverstärker dienen (z.B. wichtig beim Verlegen des Kabels), oder zum Vorspannen der Kammerelemente, wodurch das sonst übliche mechanische Vordehnen der Kammerelemente vor dem Einlegen gespart werden kann. Die Dehnung der Spannelemente beim Einlegen wird durch Bremsung erzeugt. Aramidgarne sind hierfür besonders geeignet.

Eine weitere Möglichkeit für die zusätzliche Ausnützung der nach außen offenen Vertiefungen besteht darin, diese als einen Gaskanal zu benutzen, wenn das jeweilige optische Kabel als gasdrucküberwacht betrieben werden soll.

Die vorstehend aufgeführten Möglichkeiten können auch gemischt eingesetzt werden, beispielsweise können in zwei Vertiefungen elektrische Leiter vorgesehen werden, während in einer dritten Vertiefung ein Gaskanal angeordnet ist und in einer vierten und fünften Vertiefung weitere Lichtwellenleiter angeordnet werden usw.

Alle etwaigen zusätzlichen Elemente werden zweckmäßig zusammen mit den in die Kammern eingebrachten Lichtwellenleitern (vorzugsweise in Bändchenform) eingelegt, d.h. die gesamte Kabelseele wird in einem einzigen Durchlauf fertiggestellt. Vorspannende Elemente aus Stahldrähten oder Aramidgarnen verlangen dabei zusätzliche starke und präzise Ablaufbremsen.

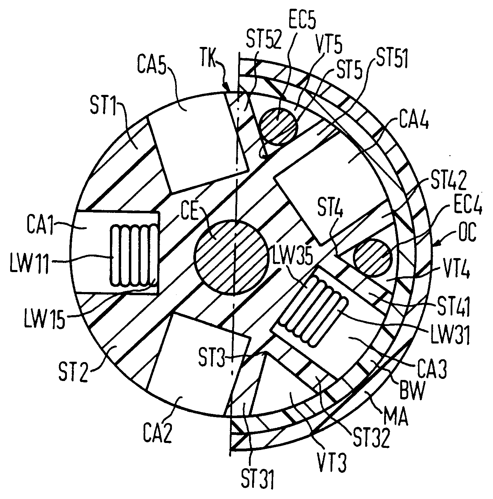

Die Erfindung und ihre Weiterbildungen werden nachfolgend anhand einer Zeichnung näher erläutert, in der ein Ausführungsbeispiel dargestellt ist. Dabei ist in der linken Hälfte der Zeichnung ein Trägerkörper mit dem üblichen Aufbau dargestellt, während im rechten Teil die durch die Erfindung vorgeschlagene Ausgestaltung gezeichnet ist. Die Kabelseele des optischen Kabels OC besteht aus einem zugfesten Zentralelement CE (bevorzugt aus Stahldraht oder hochfestem Aramidgarn), auf welches der profilierte Trägerkörper TK durch Extrusion aufgebracht wird. Dieser Trägerkörper TK weist fünf im Querschnitt rechteckförmige und nach außen offene Kammern auf, die in Längsrichtung des Kabels OC gesehen wendelförmig verlaufen und mit CA1 - CA5 bezeichnet sind. Diese rechteckförmigen Kammern CA1 - CA5 dienen der Aufnahme von vorzugsweise in Bändchenform geordneten Lichtwellenleitern, wie dies bei den Kammern CA1 und CA3 angedeutet ist. Dort sind jeweils fünf derartige Bändchen zu einem Stapel zusammengefaßt dargestellt und mit LW11 - LW15 bzw. LW31 - LW35 bezeichnet. Die einzelnen Bändchen sollten in gewissem Umfang gegeneinander beweglich sein und auch innerhalb der Kammer ein gewisses Spiel aufweisen. Im Prinzip können in einer Kammer Bändchen mit jeweils bis zu 12 Fasern in Stapeln bis zu jeweils 12 Bändchen so untergebracht werden.

Infolge der etwa rechteckförmigen Kammerquerschnitte bei den Kammern CA1 - CA5 zeigen die dazwischenliegenden Trennstege eine stark ungleichmäßige Materialverteilung derart, daß es im Außenbereich zu einer Materialanhäufung kommt, die langsam und unter Entstehung innerer Spannung nach der Extrusion auskühlt. Dies ist bei den Stegen ST1 und ST2 deutlich zu sehen. Beim Extrudieren des Trägerkörpers TK können derartige Materialanhäufungen im Bereich der Stege ST1 und ST2 zu Schwierigkeiten führen, weil z.B. bei der Abkühlung eine gewisse ungleichmäßige Deformation eintritt, die zu unerwünschten Veränderungen des Kammerquerschnitts führen kann.

Um diesen Schwierigkeiten zu begegnen sind, wie im rechten Teil der Figur dargestellt, die Materialanhäufungen im Bereich der Stege möglichst weitgehend dadurch vermieden, daß zusätzliche Vertiefungen VT3 - VT5 angebracht werden, die etwa eine dreiecksförmige oder sektorförmige Gestalt aufweisen und deren Querschnittsfläche anders, vorzugsweise kleiner ist als die der Kammer CA1 - CA5. Die nunmehr verbleibenden Doppelstege zwischen benachbarten Kammern sind mit ST31, ST32; ST41, ST42 und ST51, ST52 bezeichnet. Die Wandstärke dieser Stege ST31 -ST52 ist von innen nach außen gesehen etwa gleichbleibend und auch zweckmäßigerweise untereinander gleich gewählt, so daß bezüglich der Stege eine gleichmäßige Materialverteilung im rechten Teil der Zeichnung erreicht ist und die abkühlende Oberfläche etwa verdoppelt ist.

Die so gebildeten Vertiefungen VT3 - VT5 können für die Lösung von Nebenaufgaben herangezogen werden. Beispielsweise können jeweils in einem Teil oder in allen Vertiefungen zusätzliche Elemente EC4 bzw. EC5 untergebracht werden, welche ganz oder teilweise als elektrische Leiter ausgebildet und für Stromversorgungszwecke z.B. bei Streckenverstärkern herangezogen werden können. Auch ist es möglich, die Vertiefungen als Gaskanäle bei gasdrucküberwachten Kabeln heranzuziehen, oder mechanische Zugelemente einzulegen, die z.B. zur Unterstützung der Zugkraft des Zentralelementes dienen können. Es ist auch möglich unter Vorspannung stehende Zugelemente in die Vertiefungen einzulegen, z.B. in Form von Stahldrähten oder Aramidgarnen, wodurch das mechanische Vordehnen der Kammerelemente vor dem Einlegen der Fasern (zur Erzielung von Faser-Überlängen) eingespart werden kann. Diese vorgespannten Elemente führen dann nachträglich zu einer Stauchung des Kammerelementes und damit zur Schaffung von Überlänge in den Bändchenelementen. Schließlich ist es natürlich auch möglich, die Vertiefungen für die Unterbringung weiterer Lichtwellenleiter mit heranzuziehen, d.h. auch in den dreieckförmigen Vertiefungen einzelne Lichtwellenleiter oder Lichtwellenleiterbündel unterzubringen.

Im rechten Teil der Zeichnung ist außerdem noch dargestellt, daß die offenen Kammern (in bekannter Weise) durch eine Bewicklung BW (z.B. in Form von Bändern oder Fäden) geschlossen werden und daß außen mindestens ein Kabelmantel MA aufgebracht ist.

## Patentansprüche

1. Optisches Kabel (OC) mit in einem Trägerkörper (TK) sich in Längsrichtung wendelförmig erstreckenden, von außen zugänglichen Kammern (CA1-CA5), die zur Aufnahme von Lichtwellenleitern (LW11-LW15) dienen, wobei diese Kammern (CA1-CA5) durch Stege (ST1-St5) gegeneinander abgetrennt sind und in den Stegen (ST3-ST5) zusätzlich nach außen offene Vertiefungen (VT3-VT5) angebracht sind,
**dadurch gekennzeichnet,**
daß die Kammern (CA1-CA5) einen etwa rechteckigen Querschnitt und die Vertiefungen (VT3-VT5) einen etwa dreieckförmigen Querschnitt aufweisen sowie eine Querschnittsfläche, die von der Querschnittsfläche der kammern verschieden ist und daß die verbleibenden Stege (ST31-ST52) eine im wesentlichen gleichbleibende Wandstärke aufweisen.

2. Optisches Kabel nach Anspruch 1,
**dadurch gekennzeichnet,**
daß in den Vertiefungen (VT3-VT5) zusätzliche Elemente (EC4, EC5) untergebracht sind.

3. Optisches Kabel nach Anspruch 2,
**dadurch gekennzeichnet,**
daß in den Vertiefungen (VT3-VT5) weitere einzelne Lichtwellenleiter angeordnet sind.

4. Optisches Kabel nach einem der Ansprüche 2 oder 3,
**dadurch gekennzeichnet,**
daß in den Vertiefungen (VT3-VT5) elektrische Leiter angeordnet sind.

5. Optisches Kabel nach einem der Ansprüche 2 - 4,
**dadurch gekennzeichnet,**
daß in den Vertiefungen (VT3-VT5) längszugfeste, vorzugsweise vorgespannte Elemente angeordnet sind.

6. Optisches Kabel nach einem der vorhergehenden Ansprüche,
**dadurch gekennzeichnet,**
daß die Vertiefungen (VT3-VT5) als Gaskanäle vorwendet werden.

7. Optisches Kabel nach Anspruch 1,
**dadurch gekennzeichnet,**
daß die Querschnittsfläche der Vertiefungen (VT3 - VT5) kleiner gewählt ist, als diejenige der Kammern (CA1 - CA5).

## Claims

1. Optical cable (OC) having chambers (CA1-CA5) which extend helically in a longitudinal direction in a carrier member (TK), are accessible from outside and serve to accommodate optical fibres (LW11-LW15), said chambers (CA1-CA5) being separated from one another by webs (ST1-ST5), and outwardly open depressions (VT3-VT5) additionally being provided in the webs (ST3-ST5), characterized in that the chambers (CA1-CA5) have an approximately rectangular cross-section and the depressions (VT3-VT5) have an approximately triangular cross-section as well as a cross-sectional area which is different from the cross-sectional area of the chambers, and in that the remaining webs (ST31-ST52) have an essentially constant wall thickness.

2. Optical cable according to Claim 1, characterized in that additional elements (EC4, EC5) are accommodated in the depressions (VT3-VT5).

3. Optical cable according to Claim 2, characterized in that further individual optical fibres are arranged in the depressions (VT3-VT5).

4. Optical cable according to one of Claims 2 or 3, characterized in that electrical conductors are arranged in the depressions (VT3-VT5).

5. Optical cable according to one of Claims 2-4, characterized in that elements of high longitudinal tensile strength which are preferably prestressed are arranged in the depressions (VT3-VT5).

6. Optical cable according to one of the preceding claims, characterized in that the depressions (VT3-VT5) are used as gas channels.

7. Optical cable according to Claim 1, characterized in that the cross-sectional area of the depressions (VT3-VT5) is selected to be smaller than that of the chambers (CA1-CA5).

## Revendications

1. Câble optique (OC) comportant des chambres (CA1, CA5) accessibles de l'extérieur, qui s'étendent avec une forme hélicoïdale dans la direction longitudinale à l'intérieur d'un corps de support (TK) et servent à loger des guides d'ondes lumineuses (LW11-LW15), ces chambres (CA1-CA5) étant séparées les unes des autres par des barrettes (ST1-ST5), tandis que des renfoncements ouverts vers l'extérieur (VT3-VT5) sont aménagés en supplément dans les barrettes (ST3-ST5), caractérisé par le fait que les chambres (CA1-CA5) possèdent une section transversale approximativement rectangulaire et que les renfoncements (VT3-VT5) possèdent une section transversale approximativement triangulaire ainsi qu'une surface en coupe transversale qui diffère de la surface en coupe transversale des chambres, et que les barrettes subsistantes (ST31-ST32) possèdent une épaisseur de paroi sensiblement constante.

2. Câble optique suivant la revendication 1, caractérisé par le fait que les éléments supplémentaires (OC4, OC5) sont logés dans les renfoncements (VT3-VT5).

3. Câble optique suivant la revendication 2, caractérisé par le fait que d'autres guides individuels d'ondes lumineuses sont disposés dans les renfoncements (VT3-VT5).

4. Câble optique suivant l'une des revendications 2 ou 3, caractérisé par le fait que des conducteurs électriques sont disposés dans les renfoncements (VT3-VT5).

5. Câble optique suivant l'une des revendications 2-4, caractérisé par le fait que des éléments résistant à une traction longitudinale et de préférence précontraints sont disposés dans les renfoncements (VT3-VT5).

6. Câble optique suivant l'une des revendications précédentes, caractérisé par le fait que les renfoncements (VT3-VT5) sont préalablement mis sous forme hélicoïdale pour former des canaux de circulation de gaz.

7. Câble optique suivant la revendication 1, caractérisé par le fait que la surface en coupe transversale des renfoncements (VT3-VT5) est choisie inférieure à celle des chambres (CA1-CA5).
